# EUROPÄISCHE PATENTSCHRIFT

(11) **EP 2 911 963 B1**
(45) Veröffentlichungstag und Bekanntmachung des Hinweises auf die Patenterteilung: **20.07.2016**
(21) Anmeldenummer: 14766712.5
(22) Anmeldetag: 16.09.2014
(51) Int. Cl.: B65G 47/91

(54) **SAUGGREIFVORRICHTUNG**
VACUUM GRIPPING DEVICE
DISPOSITIF DE PRÉHENSION PAR ASPIRATION

(30) Priorität: 04.11.2013 DE 102013222377
(43) Veröffentlichungstag der Anmeldung: 02.09.2015
(73) Patentinhaber: J. Schmalz GmbH, 72293 Glatten (DE)
(72) Erfinder: EISELE, Thomas, 72275 Alpirsbach-Peterzell (DE); HOEHN, Rainer, 72280 Dornstetten (DE); DUNKMANN, Walter, 76530 Baden-Baden (DE)
(74) Vertreter: DREISS Patentanwälte PartG mbB
(86) Internationale Anmeldenummer: PCT/EP2014/069706
(87) Internationale Veröffentlichungsnummer: WO 2015/062777

(56) Entgegenhaltungen:
- DE-A1- 3 906 634
- FR-A1- 2 561 221

## Beschreibung

Die Erfindung betrifft eine Sauggreifvorrichtung, insbesondere einen Flächensauggreifer, gemäß dem Oberbegriff des Anspruchs 1.

Die Sauggreifvorrichtung ist mit einer Mehrzahl von nebeneinander an Saugstellen einer Arbeitsfläche eines Greifergehäuses angeordneten Saugkörpern ausgestattet, welche jeweils zum Ansaugen eines zu greifenden Werkstückes ausgebildet sind. Bei solchen Sauggreifvorrichtungen ist jedem Sauger ein Saugventil zugeordnet. In der FR 2 561 221 A1 ist eine Sauggreifvorrichtung mit den Merkmalen des Oberbegriffs des Anspruchs 1 beschrieben. Eine weitere Sauggreifvorrichtung ist in der DE 690 08 874 T2 beschrieben.

Geeignet sind insbesondere solche Saugventile, welche bei unbelegter Saugstelle selbsttätig schließen und so eine unerwünschte Leckage von der Ansaugseite des Ventils zu der Unterdruckversorgungsseite verhindern. Ein solches Ventil ist beispielsweise aus der DE 198 14 262 C2 bekannt. Dieses weist einen Ventilkörper auf, der an einem flexiblen, wandartigen Abschnitt angeordnet ist, welcher einen Steuerraum des Ventils begrenzt. Der Steuerraum steht in Verbindung mit der Unterdruckversorgungsseite. Auf der anderen Seite des wandartigen Abschnitts liegt der Druck der Ansaugseite des Ventils an. Durch den wandartigen Abschnitt jedoch ist der Steuerraum gegenüber der Ansaugseite strömungsmäßig abgeschlossen. Bei Kompression des Steuerraums wird der flexible Abschnitt derart verformt, dass der Ventilkörper in seine Schließstellung bewegt wird. Erfolgt ein Ansaugen im unbelegten Zustand der Ansaugseite, so stellt sich auf der Ansaugseite kein nennenswerter Unterdruck ein. Dies führt dazu, dass der Steuerraum aufgrund der statischen Druckdifferenz zwischen Steuerraum und Ansaugseite komprimiert wird und daher der Ventilkörper in seine Schließstellung gebracht wird. Das Ventil schließt daher im unbelegten Zustand der Ansaugseite selbsttätig. Solche Ventile weisen einen komplexen Aufbau auf und müssen auf die strömungstechnischen Eigenschaften der anzusteuernden Saugvorrichtung abgestimmt werden, insbesondere um die Ansprechempfindlichkeit des selbsttätigen Schließens einzustellen. Die Integration solcher Ventile in eine Sauggreifvorrichtung ist daher mit konstruktiven Herausforderungen verbunden.

Andere Arten von Sauggreifvorrichtungen sind in der US 8 070 156 B2, US 5 374 021 A oder der WO 83/04384 A1 beschrieben. Diese weisen jedoch keine den Saugstellen zugeordnete Saugkörper auf. Stattdessen haben diese Sauggreifvorrichtungen eine abschließende, an das zu greifende Werkstück anzulegende und ebene Sauplatte.

Der Erfindung liegt die Aufgabe zugrunde, eine Sauggreifvorrichtung mit integrierten Saugventilen für die Sauger bereitzustellen, wobei sich die Saugventile bei der Herstellung auf die einzelnen Sauger abstimmen lassen und eine zuverlässige und kostengünstige Herstellung und Montage ermöglicht wird.

Diese Aufgabe wird durch eine Sauggreifvorrichtung gemäß Anspruch 1 gelöst, welche eine Mehrzahl von Saugkörpern aufweist, die an Saugstellen einer Arbeitsfläche eines Greifergehäuses angeordnet sind. Hierbei ist jeweils einer Saugstelle ein in das Greifergehäuse integriertes Saugventil zugeordnet. Jedes Saugventil weist eine Unterdruckversorgungsseite mit einem Absauganschluss zum Anschluss an eine Unterdruckversorgungseinrichtung und eine mit dem Saugraum des zugeordneten Saugkörpers verbundene Ansaugseite auf (hierzu kann z.B. die Ansaugseite des eigentlichen Ventils eine Ansaugöffnung aufweisen, die mit dem Saugraum kommuniziert). Jedes Saugventil hat einen zwischen einer Öffnungslage und einer Schließlage bewegbaren Ventilkörper, wobei in der Schließlage die Strömungsverbindung zwischen Ansaugseite und Unterdruckversorgungsseite unterbrochen ist, und in der Öffnungslage ein Ansaugen von der Ansaugseite durch das Saugventil zu der Unterdruckversorgungsseite ermöglicht ist. Der Ventilkörper ist an einer flexiblen Steuermembran angeordnet, die in dem Greifergehäuse einen Steuerraum begrenzt. Daher ist der Ventilkörper in Abhängigkeit eines sich in dem Steuerraum einstellenden Unterdrucks unter Verformung der flexiblen Steuermembran von der Öffnungslage in die Schließlage bewegbar. Die Steuermembranen mehrerer oder aller Saugventile werden von Steuerabschnitten eines Membrantuches gebildet,
welches sich in dem Greifergehäuse über mehrere oder alle Saugstellen erstreckt.

An den Steuerabschnitten des Membrantuches sind die Ventilkörper für die verschiedenen Saugventile angeordnet. Da sich das Membrantuch über eine Mehrzahl von Saugstellen erstreckt und die Steuermembranen für die jeweiligen Saugventile bereitstellt, kann dieser für die Funktion wesentliche Teil der Anordnung auf komfortable Weise montiert und in das Greifergehäuse integriert werden. Das Ansprechverhalten der Saugventile wird u.a. durch die Eigenschaften der Steuermembran, insbesondere durch deren Vorspannung und Flexibilität, beeinflusst. Die Verwendung eines gemeinsamen Membrantuches ermöglicht es daher, bei Bedarf einer Mehrzahl von Saugventilen mit den gewünschten Eigenschaften bereitzustellen, insbesondere eine große Zahl von identischen Saugventilen in der Sauggreifvorrichtungen.

Das Greifergehäuse ist mehrteilig aufgebaut und umfasst ein Gehäuseoberteil, sowie ein die Arbeitsfläche aufweisendes Gehäuseunterteil. Das Membrantuch ist zwischen dem Gehäuseoberteil und dem Gehäuseunterteil angeordnet. Insbesondere kann das Membrantuch bei der Montage zwischen Gehäuseoberteil und Gehäuseunterteil eingeklemmt werden.

In dem Greifergehäuse ist insbesondere für jede Saugstelle ein sich von der Arbeitsfläche weg entlang einer Ventillängsrichtung erstreckender Ventilaufnahmeraum ausgebildet. Das Membrantuch durchspannt dabei den Ventilaufnahmeraum. Der den Ventilaufnahmeraum durchsetzende Abschnitt des Membrantuches bildet den Steuerabschnitt und somit die Steuermembran für das jeweilige Ventil. Vorzugsweise erstreckt sich das Membrantuch parallel zu der Arbeitsfläche. Das Membrantuch ist vorzugsweise entlang eines den Steuerabschnitt umlaufenden Randes in dem Ventilaufnahmeraum befestigt. Der Ventilaufnahmeraum ist vorzugsweise eine zylindrische Ausnehmung in einem von der Arbeitsfläche beabstandeten Gehäuseabschnitt, z.B. dem genannten Gehäuseoberteil. Die Ventilkörper sind vorzugsweise derart ausgebildet, dass sie sich jeweils in den Ventilaufnahmeraum hinein erstrecken. Wenn das Membrantuch zwischen Gehäuseoberteil und Gehäuseunterteil eingespannt ist, so erstrecken sich die von den Steuermembranen abgegrenzten Steuerräume der Saugventile jeweils in dem Gehäuseoberteil.

Um die Schalteigenschaften des Ventils einzustellen, ist das Membrantuch insbesondere derart gespannt in dem Ventilaufnahmeraum befestigt, dass der Ventilkörper in der Öffnungslage gegen eine Bewegung in die Schließlage vorgespannt ist. Hierzu ist der Ventilkörper an dem jeweiligen Steuerabschnitt insbesondere von dem umlaufenden Rand beabstandet, vorzugsweise mittig, angeordnet.

Die Ventilkörper der verschiedenen Saugventile können einstückig in den jeweiligen Steuerabschnitten des Membrantuches ausgebildet sein, was eine einfache Herstellung dieser wesentlichen Bestandteile der Saugventile ermöglicht.

Das Membrantuch kann an wenigstens zwei verschiedenen Saugstellen eine unterschiedliche Dicke und/oder eine unterschiedliche Flexibilität aufweisen, um die Ansprechempfindlichkeit und Schließzeit verschiedener Saugerventile unterschiedlich auszugestalten. So kann beispielsweise das Saugventil eines randständigen Saugers der Sauggreifvorrichtungen anders eingestellt sein als das Saugventil für mittige Sauger.

Die Saugkörper an den verschiedenen Saugstellen sind vorzugsweise jeweils fluchtend mit den zugeordneten Ventilkörpern an der Arbeitsfläche angeordnet. Hierbei können die Saugkörper mit den zugeordneten Steuerabschnitten und/oder den zugeordneten Ventilkörpern des jeweils ansteuernden Saugventils bewegungsgekoppelt sein (z.B. mechanisch verbunden), so dass bei Bewegung des Ventilkörpers von der Öffnungslage in die Schließlage der jeweilige Saugkörper von einer vorgeschobenen Sauglage in eine zurückgezogene Passivlage bewegt wird. Schaltet das zugeordnete Saugventil in die Schließlage, so wird der jeweilige Saugkörper in seine Passivstellung zurückgezogen. Dadurch kann verhindert werden, dass solche Sauger, die an Rändern eines zu greifenden Werkstückes nicht vollständig an dieses dichtend anliegen, aufgrund ihrer Elastizität das gegriffene Werkstück entgegen der Saugwirkung der übrigen Sauger von der Arbeitsfläche der Sauggreifvorrichtung wegdrücken.

Bei den Saugventilen handelt es sich vorzugsweise um Ventile derjenigen Art, welche bei freiem Ansaugen mit unbelegter Ansaugseite selbsttätig schließen, um eine unerwünschte Leckage zu vermeiden. Dies lässt sich bei Saugventilen der beschriebenen Art auf verschiedene Weisen realisieren.

Beispielsweise kann der Ventilkörper einen Dichtabschnitt aufweisen, welcher bei Vorliegen der Schließlage einen Absaugdurchgang verschließt, der den Steuerraum mit der Unterdruckversorgungsseite des jeweiligen Saugventils verbindet und in Öffnungslage den Absaugdurchgang freigibt. Dieser Ventilkörper weist insbesondere einen Saugseitendurchgang mit einer Drosselstelle auf, welcher bei Vorliegen der Öffnungslage die Ansaugseite mit dem Steuerraum strömungsverbindet. In der Öffnungslage liegt daher in dem jeweiligen Steuerraum der von der Unterdruckversorgung bereitgestellte Unterdruck an und wirkt auf eine Kompression des Steuerraumes hin. Durch den Saugseitendurchgang strömt von der Ansaugseite eingesaugte Luft in den Steuerraum nach, wobei diese Strömung durch die Drosselstelle begrenzt ist. Ist die Ansaugseite unbelegt, so führt die dann vergleichsweise große Strömung über die Drosselstelle zu einer Druckdifferenz und damit zu einem Unterdruck im Steuerraum gegenüber der Ansaugseite. Erreicht diese Druckdifferenz einen vorbestimmten oder vorbestimmbaren Wert, so führt dies zur Kompression des Steuerraums unter Verformung der jeweiligen Steuermembran und damit zur Bewegung des Ventilkolbens in seine Schließlage. Der dann an einem zugeordneten Dichtsitz anliegende Dichtabschnitt verschließt den Absaugdurchgang. Aufgrund des auf der Unterdruckversorgungsseite herrschenden Unterdrucks wird der Dichtabschnitt in der Schließposition gehalten und das Ventil bleibt geschlossen.

Ein selbsttätig schließendes Saugventil kann auch dadurch realisiert werden, dass der Ventilkörper einen Saugseitendurchgang mit einer Drosselstelle zur Strömungsverbindung des Steuerraums mit der Ansaugseite aufweist, und außerdem einen Dichtabschnitt aufweist, welcher in der Schließlage an einem zugeordneten Dichtsitz anliegt, wobei der Dichtabschnitt und der Dichtsitz derart angeordnet sind, dass in der Schließlage die Strömungsverbindung bereits ausgehend von der Ansaugseite durch den Saugseitendurchgang dichtend verschlossen ist. Der Steuerraum ist hier insbesondere ständig (sowohl in Öffnungslage, als auch in Schließlage) mit der Unterdruckversorgungsseite verbunden. Der Dichtsitz und der Dichtabschnitt sind vorzugsweise außerhalb des Steuerraums angeordnet. Dadurch kann das Volumen des Steuerraums klein gehalten werden, was zu kurzen Ansprechzeiten des Ventils führt. In der Öffnungslage strömt die an der Ansaugseite angesaugte Luft durch den Saugseitendurchgang in den Steuerraum nach. Ist die Ansaugseite unbelegt, so führt die große Strömung über den Strömungswiderstand der Drosselstelle zu einer Druckdifferenz und damit zu einem Unterdruck im Steuerraum gegenüber der Ansaugseite, wodurch der Ventilkolben unter Verformung der Steuermembran zur Verringerung des Volumens des Steuerraums in seine Schließlage geführt wird. In dieser Schließlage liegt der Dichtabschnitt an dem zugeordneten Dichtsitz an und wird dort festgesaugt.

Weitere Einzelheiten und vorteilhafte Ausgestaltungen der Erfindung werden im Folgenden unter Bezugnahme auf die Figuren beschrieben.

Es zeigen:
Figur 1 Ausschnitt aus einem erfindungsgemäßen Flächensauggreifer in Schnittdarstellung;
Figur 2 eine weitere Ausführungsform eines erfindungsgemäßen Flächensauggreifers in Schnittdarstellung.

In der nachfolgenden Beschreibung sowie in den Figuren sind für identische oder aneinander entsprechende Merkmale jeweils dieselben Bezugszeichen verwendet.

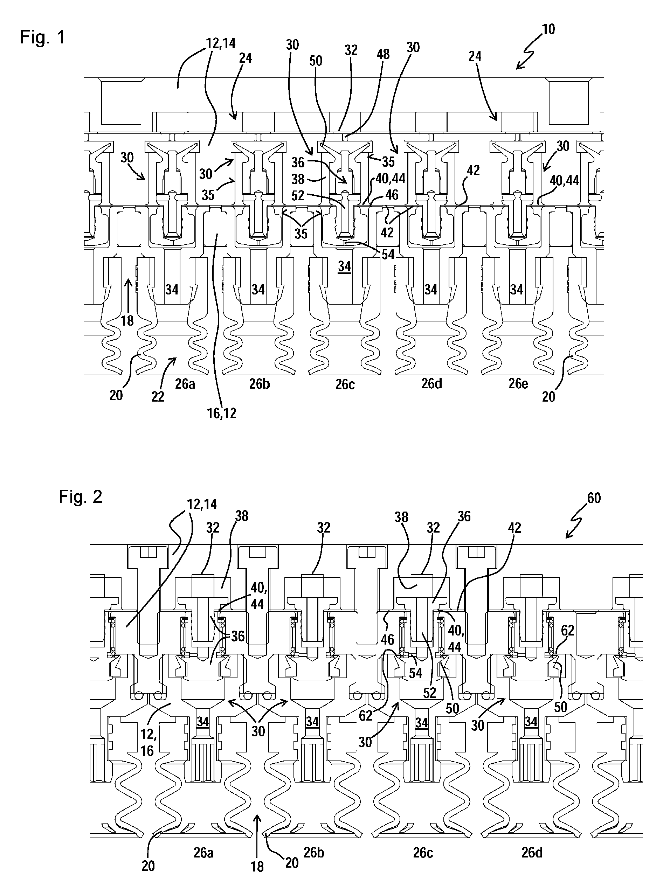

Die Figur 1 zeigt einen Ausschnitt eines Flächensauggreifers 10 in Schnittdarstellung. Der Flächensauggreifer hat ein Greifergehäuse 12, welches mehrteilig aufgebaut ist mit einem Gehäuseoberteil 14 und einem Gehäuseunterteil 16. Das Gehäuseunterteil 16 weist eine (z.B. ebene) Arbeitsfläche 18 auf, die zur Handhabung eines beispielsweise sich flächig erstreckenden Werkstückes diesem zugewandt ist. An der Arbeitsfläche 18 sind mehrere Saugkörper 20 angeordnet, welche derart über die Arbeitsfläche 18 hervorstehen, dass sie an ein zu greifendes Werkstück angelegt werden können. Jeder Saugkörper 20 begrenzt einen Saugraum 22, welcher in eine Ansaugrichtung offen ist und zum Ansaugen eines Werkstückes dichtend an diesem anliegt.

In dem Greifergehäuse 12, hier konkret in dem Gehäuseoberteil 14, sind Unterdruckversorgungskanäle 24 ausgebildet, welche an eine nicht dargestellte Unterdruckversorgungseinrichtung angeschlossen sind, mittels welcher Luft oder ein sonstiges Fluid aus den Unterdruckversorgungskanälen 24 evakuiert werden kann.

Die Saugkörper 20 definieren jeweils Saugstellen 26a bis 26e des Flächensauggreifers 10. Jeder Saugstelle 26a bis 26e ist ein in das Greifergehäuse 12 integriertes Saugventil 30 zugeordnet, wobei in der beispielhaften Darstellung der Figur 1 der Aufbau der mehreren Saugventile 30 identisch ist. Jedes Saugventil 30 hat eine Unterdruckversorgungsseite 32 mit einem Absauganschluss, der mit den Unterdruckversorgungskanälen 24 verbunden ist. Andererseits weist jedes Saugventil 30 eine mit dem Saugraum 22 der jeweiligen Saugstelle 26a bis 26e verbundene Ansaugseite 34 mit einer zu dem Saugraum 22 hin offenen Ansaugöffnung auf.

Jedes Saugventil umfasst einen sich entlang einer Ventillängsrichtung von der Arbeitsfläche 18 weg erstreckenden Ventilaufnahmeraum 35, in welchem jeweils ein Ventilkörper 36 entlang der Ventillängsrichtung verschiebbar ist. Der Ventilkörper 36 ist zwischen einer Schließlage und einer Öffnungslage (die in Figur 1 dargestellt ist) verschiebbar. In der Schließlage verschließt der Ventilkörper die Strömungsverbindung zwischen Ansaugseite 34 und Unterdruckversorgungsseite 32 des jeweiligen Saugventils 30. In der Öffnungslage ist die Strömungsverbindung freigegeben, so dass von der Ansaugseite 34 durch das jeweilige Saugventil 30 Luft zur Unterdruckversorgungsseite 32 abgesaugt werden kann.

Die Bewegung des Ventilkörpers 36 zwischen Öffnungslage und Schließlage wird dabei durch den Druck in einem Steuerraum 38 gesteuert. Der Steuerraum 38 ist in dem Greifergehäuse 12 für jedes Saugventil 30 durch eine Steuermembran 40 abgegrenzt, welche den jeweiligen Ventilaufnahmeraum 35 durchspannt.

Dabei ist der Ventilkörper 36 derart an der Steuermembran 40 angeordnet, dass bei Bewegung des Ventilkörpers 36 von der in Figur 1 dargestellten Öffnungslage in die Schließlage die Steuermembran 40 verformt wird (genauer: in Richtung der Unterdruckversorgungsseite 32 ausgebeult wird) und dadurch das Volumen des Steuerraumes 38 verringert wird. Der Ventilkolben 36 wird somit dann in seine Schließlage bewegt, wenn in dem Steuerraum 38 ein Unterdruck gegenüber dem auf der anderen Seite der Steuermembran 40 herrschenden Druck anliegt.

Die Steuermembranen 40 der Saugventile 30 an den Saugstellen 26a bis 26e werden dadurch gebildet, dass das in dem Greifergehäuse 12 ein sich über die Saugstellen 26a bis 26e erstreckendes Membrantuch 42 angeordnet ist. Die Steuermembranen 40 sind jeweils von Steuerabschnitten des Membrantuches 42 gebildet. Das Membrantuch 42 ist insbesondere zwischen dem Gehäuseoberteil 14 und dem Gehäuseunterteil 16 derart eingeklemmt, dass es sich im Wesentlichen parallel zu der Arbeitsfläche 18 jeweils durch die Ventilaufnahmeräume 35 der Saugventile 30 erstreckt. Dabei grenzt das Membrantuch 42 mit seinem jeweiligen Steuerabschnitt 44 in dem Gehäuseoberteil 14 jeweils den Steuerraum 38 des jeweiligen Saugventils 30 ab. Vorzugsweise ist dabei das Membrantuch 42 jeweils entlang eines umlaufenden Randes 46 in dem Ventilaufnahmeraum 35 befestigt.

Durch die Spannung des Membrantuches 42 und insbesondere die Spannung des jeweiligen Steuerabschnitts 44 zwischen dem umlaufenden Rand 46 kann daher eine Vorspannkraft für eine Bewegung des Ventilkörpers 36 aus seiner Öffnungslage in die Schließlage vorgegeben werden.

Die in der Figur 1 dargestellten Saugventile 30 sind derart ausgestaltet, dass sie bei freiem Ansaugen mit unbelegter Saugstelle 26a bis 26e in die Schließstellung schalten. In Figur 1 ist der Steuerraum 38 eines jeden Saugventils 30 über einen Absaugdurchgang 48 mit der Unterdruckversorgungsseite 32 und damit mit den Unterdruckversorgungskanälen 24 verbunden. Der Ventilkörper 36 weist jeweils einen Dichtabschnitt 50 auf. Dieser ist in dem Steuerraum 38 angeordnet und derart ausgebildet, dass der Dichtabschnitt 50 bei Vorliegen der Schließlage den Absaugdurchgang 48 derart überdeckt, dass keine Strömungsverbindung von der Unterdruckversorgungsseite 32 in den jeweiligen Steuerraum 38 besteht.

Der Ventilkörper 36 weist außerdem einen Saugseitendurchgang 52 mit einer Drosselstelle 54 auf. Der Saugseitendurchgang 52 mündet einerseits in den Steuerraum 38, andererseits über die Drosselstelle auf der Ansaugseite 54. Insofern stellt der Saugseitendurchgang 52 eine Verbindung von dem Steuerraum 38 durch die Steuermembran 40 auf die Ansaugseite 34 her. Aufgrund der Drosselstelle 54 ist die Strömung von der Ansaugseite 34 in den Steuerraum 38 begrenzt. Für eine Strömung durch den Saugseitendurchgang 52 wird von der Drosselstelle 54 ein Strömungswiderstand bereitgestellt. Ist die Saugstelle 26a bis 26e für eines der Saugventile 30 unbelegt (freies Ansaugen), so stellt sich aufgrund der verhältnismäßig großen Strömung über die Drosselstelle 54 ein Unterdruck in dem durch den Absaugdurchgang 48 besaugten Steuerraum 38 gegenüber der Ansaugseite 34 ein. Dies führt dazu, dass der Ventilkörper 36 entgegen einer durch die Steuermembran 40 aufgebrachten Vorspannkraft in seine Schließlage bewegt wird. Der Dichtabschnitt 50 gelangt in dichtende Anlage an den Absaugdurchgang 48 und wird dort festgesaugt.

Ist die jeweilige Saugstelle 26a bis 26e jedoch von einem in Figur 1 nicht dargestellten Werkstück belegt, so wird der Saugraum 22 des jeweiligen Saugers 20 evakuiert und es kann sich keine nennenswerte Strömung über die Drosselstelle 54 und folglich auch kein ausreichender Unterdruck in dem Steuerraum 38 aufbauen. Der Ventilkörper 36 bleibt dann in seiner Öffnungslage, wie in Figur 1 dargestellt.

Zur Montage des Flächensauggreifers 10 können die Ventilkörper 36 an den jeweiligen Steuerabschnitten 44 des Membrantuches 42 befestigt werden. Beispielsweise können die Ventilkörper durch das Membrantuch 42 durchgesteckt und mit diesem verklebt werden. Auch eine einstückige Ausgestaltung von Ventilkörpern und Membrantuch ist möglich. Die Einheit aus Membrantuch 42 und Ventilkörpern 36 kann dann beispielsweise in das Gehäuseoberteil 14 eingesetzt werden, so dass die Ventilkörper 36 mit ihren Dichtabschnitten 50 in die Ventilaufnahmeräume 35 eingreifen. Hierauf kann dann das Gehäuseunterteil 16 aufgesetzt werden, so dass das Membrantuch 42 zwischen Gehäuseoberteil 14 und Gehäuseunterteil 16 eingespannt ist.

Der in der Figur 2 dargestellte Flächensauggreifer 60 unterscheidet sich von dem Flächensauggreifer 10 im Wesentlichen durch die Ausgestaltung der Saugventile 30. Im Übrigen wird auf die vorstehende Beschreibung Bezug genommen.

Das Membrantuch 42 ist bei dem Flächensauggreifer 60 zwischen Gehäuseoberteil 14 und Gehäuseunterteil 16 des Greifergehäuses 12 eingespannt. An den Steuerabschnitten 44 des Membrantuchs 42, welche jeweils die Steuermembran 40 eines Saugventils 30 bilden, ist jeweils ein Ventilkörper 36 derart angeordnet, dass er zwischen einer Öffnungslage (in Figur 2 dargestellt) und einer Schließlage verschiebbar ist. Auch bei dem Flächensauggreifer 60 grenzt das Membrantuch 42 mit dem jeweiligen Steuerabschnitt 44 einen jeweiligen Steuerraum 38 in dem Gehäuseoberteil 14 ab. Bei dem Flächensauggreifer 60 ist der Steuerraum 38 unabhängig von der Lage des Ventilkörpers 36 mit der Unterdruckversorgungsseite 32 strömungsverbunden.

Bei dem Flächensauggreifer 60 ist der Dichtabschnitt 50 außerhalb des jeweiligen Steuerraums 38 an einem sich entlang einer Ventillängsrichtung von der Steuermembran 40 weg erstreckenden Führungsabschnitt des Ventilkörpers 36 angeordnet. Im dargestellten Beispiel ist der Dichtabschnitt 50 als ein den Ventilkörper ringbundartig umgebender Abschnitt aus einem flexiblen Dichtmaterial ausgebildet. Der den Ventilkörper 36 aufnehmende Innenraum des Gehäuseunterteils weist einen radialen Vorsprung auf, der einen Dichtsitz 62 für den Dichtabschnitt 50 bildet. Der Dichtabschnitt 50 und der Dichtsitz 62 sind derart angeordnet, dass bei Vorliegen der Schließlage des Ventilkolbens 36 der Dichtabschnitt 50 an dem Dichtsitz 62 anliegt und dadurch eine Strömungsverbindung von der Ansaugseite 34 in dem Saugseitendurchgang 52 unterbrochen ist. Insofern erfolgt hier die Unterbrechung der Strömungsverbindung bereits außerhalb des Steuerraumes 38 auf der dem Steuerraum 38 abgewandten Seite der Steuermembran 40. Der Steuerraum 38 kann dadurch mit vergleichsweise geringerem Volumen als bei dem Flächensauggreifer 10 ausgeführt werden, wodurch je nach Ausgestaltung eine kurze Ansprechzeit des Saugventils 30 erzielt werden kann.

Die Ausgestaltung mit dem Membrantuch 42, an welchem die Ventilkörper 36 jeweils an den Steuerabschnitten 44 angeordnet sind, ermöglicht auch bei dem Flächensauggreifer 60 eine zuverlässige und einfache Montage. Beispielsweise kann, wie zu Figur 1 erläutert, das Membrantuch 42 zwischen Gehäuseoberteil 14 und Gehäuseunterteil 16 eingeklemmt werden.

## Patentansprüche

1. Sauggreifvorrichtung (10, 60)
- mit einer Mehrzahl von nebeneinander an Saugstellen (26a-26e) einer Arbeitsfläche (18) eines Greifergehäuses (12) angeordneten Saugkörpern (20), welche je einen Saugraum (22) zur Anlage an ein zu greifendes Werkstück aufweisen,
- mit jeweils einem zugeordneten Saugventil (30) für jede Saugstelle (26a-26e), wobei jedes Saugventil (30) eine Unterdruckversorgungsseite (32) zum Anschluss an eine Unterdruckversorgungseinrichtung und eine mit dem Saugraum (22) des zugeordneten Saugkörpers (20) verbundene Ansaugseite (34) aufweist,
wobei das Saugventil (30) jeder Saugstelle (26a-26e) einen zwischen einer Öffnungslage und einer Schließlage bewegbaren Ventilkörper (36) aufweist, wobei der Ventilkörper (36) an einer flexiblen Steuermembran (40) angeordnet ist, die einen Steuerraum (38) derart begrenzt, dass der Ventilkörper (36) in Abhängigkeit eines sich im Steuerraum (38) einstellenden Unterdrucks unter Verformung der Steuermembran (40) von der Öffnungslage in die Schließlage bewegbar ist,
und wobei in dem Greifergehäuse (12) ein sich über mehrere oder alle Saugstellen (26a-26e) erstreckendes Membrantuch (42) derart angeordnet ist, dass die Steuermembranen (40) mehrerer oder aller Saugventile (30) von Steuerabschnitten (44) des Membrantuches (42) gebildet sind,
**dadurch gekennzeichnet, dass** das Greifergehäuse (12) ein Gehäuseoberteil (14) und ein die Arbeitsfläche (18) aufweisendes Gehäuseunterteil (16) umfasst, wobei das Membrantuch (42) zwischen dem Gehäuseoberteil (14) und dem Gehäuseunterteil (16) angeordnet ist.

2. Sauggreifvorrichtung (10, 60) nach Anspruch 1, **dadurch gekennzeichnet, dass** das Membrantuch (42) zwischen dem Gehäuseoberteil (14) und dem Gehäuseunterteil (16) eingeklemmt ist.

3. Sauggreifvorrichtung (10, 60) nach einem der vorherigen Ansprüche, **dadurch gekennzeichnet, dass** für jede Saugstelle (26a-26e) ein sich in dem Greifergehäuse (12) von der Arbeitsfläche (18) entlang einer Ventillängsrichtung weg erstreckender Ventilaufnahmeraum (35) ausgebildet ist, wobei das Membrantuch (42) mit dem jeweiligen Steuerabschnitt (44) den Ventilaufnahmeraum (35) durchspannt, insbesondere sich parallel zur Arbeitsfläche (18) erstreckend, und entlang eines den Steuerabschnitt (44) umlaufenden Randes (46) in dem Ventilaufnahmeraum (35) befestigt ist.

4. Sauggreifvorrichtung (10, 60) nach Anspruch 3, **dadurch gekennzeichnet, dass** das Membrantuch (42) derart gespannt an dem Rand (46) befestigt ist, dass der Ventilkörper (36) in der Öffnungslage gegen eine Bewegung in die Schließlage vorgespannt ist.

5. Sauggreifvorrichtung (10, 60) nach Anspruch 3 oder 4, **dadurch gekennzeichnet, dass** der Ventilkörper (36) an dem Steuerabschnitt (44) von dem umlaufenden Rand (46) beabstandet, insbesondere mittig, angeordnet ist.

6. Sauggreifvorrichtung nach einem der vorherigen Ansprüche, **dadurch gekennzeichnet, dass** die Ventilkörper (36) der Saugventile (30) jeweils einstückig mit dem Membrantuch (42) ausgebildet sind.

7. Sauggreifvorrichtung nach einem der vorherigen Ansprüche, **dadurch gekennzeichnet, dass** das Membrantuch (42) an wenigstens zwei verschiedenen Saugstellen (26a-26e) eine unterschiedliche Dicke und/oder eine unterschiedliche Flexibilität aufweist.

8. Sauggreifvorrichtung nach wenigstens Anspruch 3" **dadurch gekennzeichnet, dass** an jeder Saugstelle (26a-26e) der jeweilige Saugkörper fluchtend zu dem jeweiligen Ventilkörper (36), welcher in dem jeweiligen Ventilaufnahmeraum (35) aufgenommenen ist, auf der dem Ventilkörper (36) gegenüberliegenden Seite der Steuermembran (40) angeordnet ist.

9. Sauggreifvorrichtung nach einem der vorherigen Ansprüche, **dadurch gekennzeichnet, dass** der Saugkörper (20) der jeweils zugeordneten Saugstellen (26a-26e) derart mit dem Steuerabschnitt (44) des Membrantuches (42) verbunden ist, dass bei Bewegung des Ventilkörpers (36) von der Öffnungslage in die Schließlage der jeweilige Saugkörper (20) von einer vorgeschobenen Sauglage in eine zurückgezogene Passivlage bewegt wird.

10. Sauggreifvorrichtung (10) nach einem der vorherigen Ansprüche, **dadurch gekennzeichnet, dass** der Ventilkörper (36) einen Dichtabschnitt (50) aufweist, welcher in Schließlage einen Absaugdurchgang (48) verschließt, der den Steuerraum (38) mit der Unterdruckversorgungsseite (32) verbindet und in Öffnungslage den Absaugdurchgang (48) freigibt, wobei der Ventilkörper (36) einen Saugseitendurchgang (52) mit einer Drosselstelle (54) zur Strömungsverbindung der Ansaugseite (34) mit dem Steuerraum (38) aufweist.

11. Sauggreifvorrichtung (60) nach einem der Ansprüche 1 bis 9, **dadurch gekennzeichnet, dass** der Steuerraum (38) mit der Unterdruckversorgungsseite (32) strömungsverbunden ist und dass der Ventilkörper (36) einen Saugseitendurchgang (52) mit einer Drosselstelle (54) zur Strömungsverbindung des Steuerraums (38) mit der Ansaugseite (34) und einen Dichtabschnitt (50) aufweist, welcher in der Schließlage an einen Dichtsitz (62) anliegt, wobei der Dichtabschnitt (50) und der Dichtsitz (62) derart angeordnet sind, dass in der Schließlage die Strömungsverbindung von der Ansaugseite (34) durch den Saugseitendurchgang (52) dichtend verschlossen ist.

## Claims

1. A vacuum gripping device (10, 60)
- having a plurality of suction bodies (20) disposed adjacent to one another at suction points (26a-26e) of a working surface (18) of a gripper housing (12), each of which has a suction chamber (22) that is to abut against a workpiece that is to be gripped,
- each suction point (26a-26e) having an allocated suction valve (30), wherein each suction valve (30) has a vacuum supply side (32) that is to be connected to a vacuum supply device, and a suction side (34) connected to the suction chamber (22) of the suction body (20) allocated thereto,
wherein the suction valve (30) for each suction point (26a, 26e) has a valve body (36) that can move between an open position and a closed position, wherein the valve body (36) is disposed at a flexible control membrane (40), which delimits a control chamber (38) such that the valve body (36) can move as a result of a deformation of the control membrane (40) from the open position to the closed position depending on a vacuum occurring in the control chamber (38), and wherein a membrane sheet (42) extending over several or all of the suction points (26a-26e) is disposed in the gripper housing (12) such that the control membranes (40) for several or all of the suction valves (30) are formed by control sections (44) of the membrane sheet (42),
**characterized in that** the gripper housing (12) comprises a housing upper part (14), and a housing lower part (16) having the working surface (18), wherein the membrane sheet (42) is disposed between the housing upper part (14) and the housing lower part (16).

2. The vacuum gripping device (10, 60) according to Claim 1, **characterized in that** the membrane sheet (42) is clamped between the housing upper part (14) and the housing lower part (16).

3. The vacuum gripping device (10, 60) according to one of the preceding Claims, **characterized in that** a valve accommodating chamber (35) is formed for each suction point (26a-26e), extending in the gripper housing (12) away from the working surface (18) along a valve longitudinal direction, wherein the membrane sheet (42) spans the valve accommodating chamber (35) with the respective control section (44), in particular extending parallel to the working surface (18), and is fixed in the valve accommodating chamber (35) along an edge (46) encompassing the control section (44).

4. The vacuum gripping device (10, 60) according to Claim 3, **characterized in that** the membrane sheet (42) is attached at the edge (46) and tensioned such that the valve body (36) is pre-tensioned in the open position, against a movement into the closed position.

5. The vacuum gripping device (10, 60) according to Claim 3 or 4, **characterized in that** the valve body (36) is disposed at the control section (44), spaced apart from the encompassing edge (46), in particular in the center.

6. The vacuum gripping device according to one of the preceding Claims, **characterized in that** the valve bodies (36) of the suction valve (30) are each designed as an integral part of the membrane sheet (42).

7. The vacuum gripping device according to one of the preceding Claims, **characterized in that** the membrane sheet (42) has a different thickness and/or a different flexibility in at least two different suction points (26a, 26e).

8. The vacuum gripping device according to at least Claim 3, **characterized in that**, at each suction point (26a-26e), the respective suction body is disposed aligned with the respective valve body (36), which is accommodated in the respective accommodating chamber (35), on the side of the control membrane (40) lying opposite the valve body (36).

9. The vacuum gripping device according to one of the preceding Claims, **characterized in that** the suction body (20) of the respective allocated suction points (26a-26e) are connected to the control sections (44) of the membrane sheet (42) such that, when the valve body (36) is moved from the open position to the closed position, the respective suction body (20) is moved from an advanced suction position to a retracted passive position.

10. The vacuum gripping device (10) according to one of the preceding Claims, **characterized in that** the valve body (36) has a sealing section (50), which closes a suction passage (48) when in the closed position, which suction passage (48) connects the control chamber (38) to the vacuum supply side (32), and opens the suction passage (48) when in the open position, wherein the valve body (36) has a suction side passage (52) provided with a restriction (54), for establishing a flow connection from the suction side (34) to the control chamber (38).

11. The vacuum gripping device (60) according to one of the Claims 1 to 9, **characterized in that** the control chamber (38) has a flow connection to vacuum supply side (32), and **in that** the valve body (36) has a suction side passage (52) having a restriction (54) for establishing a flow connection of the control chamber (38) to the suction side (34), and having a sealing section (50), which abuts on a seal seat (62) when in the closed position, wherein the sealing section (50) and the seal seat (62) are disposed such that the flow connection from the suction side (34) through the suction side passage (52) is closed in a sealed manner.

## Revendications

1. Dispositif de préhension par aspiration (10, 60)
- avec une pluralité de corps d'aspiration (20) qui sont disposés les uns à côté des autres sur des points d'aspiration (26a-26e) d'une surface de travail (18) d'un carter de préhenseur (12) et qui présentent chacun un espace d'aspiration (22) pour l'appui contre une pièce à saisir,
- avec respectivement une soupape d'aspiration (30) associée pour chaque point d'aspiration (26a-26e), chaque soupape d'aspiration (30) présentant un côté d'alimentation en dépression (32) pour être raccordée à un dispositif d'alimentation en dépression ainsi qu'un côté d'aspiration (34) communiquant avec ledit espace d'aspiration (22) du corps d'aspiration (20) associé,
dans lequel ladite soupape d'aspiration (30) de chaque point d'aspiration (26a-26e) présente un corps de soupape (36) qui est déplaçable entre une position d'ouverture et une position de fermeture, ledit corps de soupape (36) étant disposé sur une membrane de commande (40) flexible qui délimite un espace de commande (38) de telle manière que le corps de soupape (36) peut être déplacé de la position d'ouverture dans la position de fermeture en fonction d'une dépression s'établissant dans ledit espace de commande (38), sous déformation de la membrane de commande (40),
et dans lequel une toile de membrane (42) s'étendant sur plusieurs ou l'ensemble des points d'aspiration (26a-26e) est disposée dans le carter de préhenseur (12) de telle manière que les membranes de commande (40) de plusieurs ou de l'ensemble des soupapes d'aspiration (30) sont formées par des sections de commande (44) de la toile de membrane (42),
**caractérisé par le fait que** le carter de préhenseur (12) comprend une partie supérieure de carter (14) et une partie inférieure de carter (16) présentant ladite surface de travail (18), la toile de membrane (42) étant disposée entre ladite partie supérieure de carter (14) et ladite partie inférieure de carter (16).

2. Dispositif de préhension par aspiration (10, 60) selon la revendication 1, **caractérisé par le fait que** la toile de membrane (42) est coincée entre ladite partie supérieure de carter (14) et ladite partie inférieure de carter (16).

3. Dispositif de préhension par aspiration (10, 60) selon l'une quelconque des revendications précédentes, **caractérisé par le fait qu'**un espace de logement de soupape (35) qui s'étend à l'intérieur du carter de préhenseur (12) dans la direction opposée à la surface de travail (18), suivant un sens longitudinal de soupape, est réalisé pour chaque point d'aspiration (26a-26e), ladite toile de membrane (42), avec la section de commande (44) respective, étant tendue à travers ledit espace de logement de soupape (35), en particulier en s'étendant parallèlement à la surface de travail (18), et étant fixée dans ledit espace de logement de soupape (35) le long d'un bord (46) s'étendant autour de la section de commande (44).

4. Dispositif de préhension par aspiration (10, 60) selon la revendication 3, **caractérisé par le fait que** la toile de membrane (42) est fixée sur le bord (46) d'une manière tellement tendue que, dans la position d'ouverture, le corps de soupape (36) est précontraint contre un mouvement dans la position de fermeture.

5. Dispositif de préhension par aspiration (10, 60) selon la revendication 3 ou 4, **caractérisé par le fait que** le corps de soupape (36) est disposé sur la section de commande (44) de manière à être espacé du bord (46) périphérique, en particulier de manière centrale.

6. Dispositif de préhension par aspiration selon l'une quelconque des revendications précédentes, **caractérisé par le fait que** les corps de soupape (36) des soupapes d'aspiration (30) sont réalisés chacun en une seule pièce avec la toile de membrane (42).

7. Dispositif de préhension par aspiration selon l'une quelconque des revendications précédentes, **caractérisé par le fait que** la toile de membrane (42) présente, sur au moins deux points d'aspiration (26a-26e) différents, une épaisseur différente et/ou une flexibilité différente.

8. Dispositif de préhension par aspiration selon la revendication 3 au moins, **caractérisé par le fait que**, sur chaque point d'aspiration (26a-26e), le corps d'aspiration respectif est disposé en alignement par rapport au corps de soupape (36) respectif qui est reçu à l'intérieur de l'espace de logement de soupape (35) respectif, sur le côté de la membrane de commande (40) situé en face du corps de soupape (36).

9. Dispositif de préhension par aspiration selon l'une quelconque des revendications précédentes, **caractérisé par le fait que** le corps d'aspiration (20) des points d'aspiration (26a-26e) respectivement associés est relié à la section de commande (44) de la toile de membrane (42) de telle manière que, lorsque le corps de soupape (36) est déplacé de la position d'ouverture dans la position de fermeture, le corps d'aspiration (20) respectif est déplacé d'une position d'aspiration avancée dans une position passive rétractée.

10. Dispositif de préhension par aspiration (10) selon l'une quelconque des revendications précédentes, **caractérisé par le fait que** le corps de soupape (36) présente une section d'étanchéité (50) qui, dans la position de fermeture, ferme un passage d'aspiration (48) qui fait communiquer ledit espace de commande (38) avec le côté d'alimentation en dépression (32), et qui, dans la position d'ouverture, libère ledit passage d'aspiration (48), le corps de soupape (36) présentant un passage de côté aspiration (52) avec un point d'étranglement (54) pour la communication fluidique du côté d'aspiration (34) avec ledit espace de commande (38).

11. Dispositif de préhension par aspiration (60) selon l'une quelconque des revendications 1 à 9, **caractérisé par le fait que** ledit espace de commande (38) est en communication fluidique avec le côté d'alimentation en dépression (32) et que le corps de soupape (36) présente un passage de côté aspiration (52) avec un point d'étranglement (54) pour la communication fluidique de l'espace de commande (38) avec le côté d'aspiration (34) ainsi qu'une section d'étanchéité (50) qui, dans la position de fermeture, s'applique contre un siège d'étanchéité (62), ladite section d'étanchéité (50) et ledit siège d'étanchéité (62) étant disposés de telle manière que, dans la position de fermeture, la communication fluidique à partir du côté d'aspiration (34) est fermée de manière étanche par ledit passage de côté aspiration (52).
